# EUROPEAN PATENT APPLICATION

(11) **EP 4 709 021 A1**
(43) Date of publication of application: **11.03.2026**
(21) Application number: 25201341.2
(22) Date of filing: 10.09.2025
(51) Int. Cl.: H04W 74/08, H04W 72/566, H04W 74/0816, H04W 84/12

(54) **METHODS FOR PERFORMING TRANSMISSION OF BURST AND HIGH-PRIORITY TRIGGER FRAME AND PERFORMING TRANSMISSION OF PHYSICAL LAYER PROTOCOL DATA UNIT WITH HIGH-PRIORITY TRAFFIC AND ASSOCIATED WIRELESS COMMUNICATION DEVICE**

(30) Priority: 10.09.2024 US 202463692744 P
(71) Applicant: MEDIATEK INC., Hsinchu City 30078 (TW)
(72) Inventor: WAN, Chia-Shun, Hsinchu City 30078 (TW); FANG, Yonggang, San Jose, 95134 (US); HUANG, Chi-Han, Hsinchu City 30078 (TW); HUANG, Kun-Sheng, Hsinchu City 30078 (TW)
(74) Representative: Pfenning, Meinig & Partner mbB

(57) **Abstract**

A method for performing communications via a channel by a wireless communication device includes: performing transmission of a first sub-burst included in a burst; after the transmission of the first sub-burst is completed, transmitting a high-priority trigger (HPT) frame via the channel for indicating transmission of the burst is interruptible; and during a predetermined time interval after transmission of the HPT frame is completed, detecting whether the channel is busy in order to determine whether to perform transmission of a second sub-burst included in the burst.

## Description

### CROSS REFERENCE TO RELATED APPLICATIONS

This application claims the benefit of U.S. Provisional Application No. 63/692,744, filed on September 10th, 2024. The content of the application is incorporated herein by reference.

### BACKGROUND

The present disclosure is related to wireless communication, and more particularly, to a method for performing transmission of a burst and a high-priority trigger (HPT) frame, a method for performing transmission of a PPDU with high-priority traffic, and an associated wireless communication device.

In order to reduce the transmission latency of a physical layer protocol data unit (PPDU) with high-priority traffic to below 5 milliseconds (ms; i.e., to allow a wireless communication device with high-priority requirements to contend for a channel more early), an existing method is to configure a smaller transmission opportunity (TXOP) limit for a basic service set (BSS). This method, however, has the disadvantage of reducing overall peak throughput, and the time for the backoff procedure will be getting higher, leading to higher overhead and lower transmission efficiency.

Another existing method utilizes the preemption mechanism to interrupt a TXOP in order to perform high-priority traffic transmission, thereby improving latency of high-priority traffic. The disadvantage of this method is that, after a wireless communication device with high-priority requirements (e.g., a station (STA)) transmits a preempt request, the receiving device (e.g., an access point (AP)) may need to perform multiple rounds of polling/triggering. Furthermore, under a situation that the AP cannot identify which STA transmits the preempt request, ineffective polling may occur, thereby increasing overhead. In addition, this method may use reserved bits in a data frame or a block acknowledgment (BA) frame for preempt-able indication. For some legacy STAs, however, may directly ignore the data/BA frame including the reserved bits, which causes applicable scenarios to be limited.

### SUMMARY

It is therefore one of the objectives of the present disclosure to provide a method for performing transmission of a burst and an HPT frame, a method for performing transmission of a PPDU with high-priority traffic, and an associated wireless communication device, in order to address the above-mentioned issues.

According to an embodiment of the present disclosure, a method for performing communications via a channel by a wireless communication device is provided. The method comprises: performing transmission of a first-sub-burst comprised in a burst; after the transmission of the first sub-burst is completed, transmitting an HPT frame via the channel for indicating transmission of the burst is interruptible; and during a predetermined time interval after transmission of the HPT frame is completed, detecting whether the channel is busy in order to determine whether to perform transmission of a second sub-burst comprised in the burst.

In an embodiment of the present disclosure, the predetermined time interval is a point coordination function interframe space (PIFS).

In an embodiment of the present disclosure, the HPT frame is implemented by a clear to send (CTS) frame. The HPT frame comprises a frame control field and a receiver address (RA) field; and one or more bits comprised in the frame control field and the RA field is utilized to indicate the transmission of the burst is interruptible. The frame control field comprises a more fragments sub-field and a more data sub-field, and a bit corresponding to any of the more fragments sub-field and the more data sub-field is utilized to indicate the transmission of the burst is interruptible. The RA field is set as a media access control (MAC) address of the wireless communication device. Particularly, the MAC address comprises an organizationally unique identifier (OUI) field, and a bit for indicating globally unique or locally administered within the OUI field is utilized to indicate the transmission of the burst is interruptible.

In an embodiment of the present disclosure, a network allocation vector (NAV) reservation for the first sub-burst and the HPT frame extends up to a beginning of the second sub-burst.

In an embodiment of the present disclosure, the step of during the predetermined time interval after the transmission of the HPT frame is completed, detecting whether the channel is busy in order to determine whether to perform the transmission of the second sub-burst comprises: in response to the channel being detected to be busy during the predetermined time interval, aborting the transmission of the burst; and in response to the channel not being detected to be busy during the predetermined time interval, determining to perform the transmission of the second sub-burst.

In an embodiment of the present disclosure, the method further comprises: in response to a physical layer protocol data unit (PPDU) with high-priority traffic being expected to be transmitted by the wireless communication device when the transmission of the first sub-burst is performed, aborting the transmission of the burst after the transmission of the first sub-burst is completed, and performing operations of serving the PPDU with high-priority traffic.

According to an embodiment of the present disclosure, a method for performing communications via a channel by a wireless communication device is provided. The method comprises: in response to a PPDU with high priority traffic being expected to be transmitted, determining whether an HPT frame is received via the channel, wherein the HPT frame indicates transmission of a burst performed via the channel is interruptible; in response to the HPT frame being received via the channel, transmitting a request to send (RTS) frame via the channel, wherein a preamble of the RTS frame is generated based on parameters dedicated to high-priority traffic; and in response to a clear to send (CTS) frame, which corresponds to the RTS frame, being received via the channel, transmitting the PPDU with the high-priority traffic via the channel.

In an embodiment of the present disclosure, the HPT frame further indicates an NAV end time, and the method further comprises: in response to the HPT frame being received via the channel, determining whether the HPT frame has a correct frame check sequence (FCS) value, and determining whether an NAV end time of the wireless communication device is not greater than a sum of the NAV end time indicated by the HPT frame and a predetermined time value.

In an embodiment of the present disclosure, the method further comprises: in response to the HPT frame having the correct FCS value, and the NAV end time of the wireless communication device not being greater than the sum of the NAV end time indicated by the HPT frame and the predetermined time value, clearing an NAV of the wireless communication device and transmitting the RTS frame.

In an embodiment of the present disclosure, the method further comprises: in response to a preamble of any RTS frame being successfully detected on the channel, and an FCS value for the any RTS frame not being correct, applying an extended interframe space (EIFS).

In an embodiment of the present disclosure, the RTS frame has a non-high throughput (non-HT) format and has a data rate determined by the parameters dedicated to high priority traffic.

According to an embodiment of the present disclosure, a wireless communication device is provided. The wireless communication device comprises a wireless transceiver circuit and a processor coupled to the wireless transceiver circuit. The processor is configured to perform communications via a channel through the wireless transceiver circuit. For example, the processor performs operations comprising: performing transmission of a first sub-burst comprised in a burst; after the transmission of the first sub-burst is completed, transmitting an HPT frame via the channel for indicating transmission of the burst is interruptible; and during a predetermined time interval after transmission of the HPT frame is completed, detecting whether the channel is busy in order to determine whether to perform transmission of a second sub-burst comprised in the burst via the wireless transceiver circuit.

According to an embodiment of the present disclosure, the predetermined time interval is a PIFS.

According to an embodiment of the present disclosure, the HPT frame is implemented by a CTS frame.

According to an embodiment of the present disclosure, the processor is further arranged to: in response to the channel being detected to be busy during the predetermined time interval, abort the transmission of the burst; and in response to the channel not being detected to be busy during the predetermined time interval, determine to perform the transmission of the second sub-burst via the wireless transceiver circuit.

According to an embodiment of the present disclosure, the processor is further arranged to: in response to a physical layer protocol data unit (PPDU) with high-priority traffic being expected to be transmitted by the wireless communication device when the transmission of the first sub-burst is performed, abort the transmission of the burst after the transmission of the first sub-burst is completed, and perform operations of serving the PPDU with high-priority traffic.

One of the benefits of the present disclosure is that, the methods and the associated wireless communication devices of the present disclosure can transmit an HPT frame after transmission of one sub-burst comprised in a burst is completed, in order to notify other wireless communication devices that the burst transmission performed by an interruptible burst (IB) initiator can be interrupted, which can improve the high-priority traffic latency while having minimum impact on the peak throughput.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a wireless communication device according to an embodiment of the present disclosure.
FIG. 2 is a diagram illustrating a format of an HPT frame according to an embodiment of the present disclosure.
FIG. 3 is a diagram illustrating multiple sub-fields within a frame control field of an HPT frame according to an embodiment of the present disclosure.
FIG. 4 is a diagram illustrating an MAC address format of an RA field of an HPT frame according to an embodiment of the present disclosure.
FIG. 5 is a diagram illustrating an IB initiator that performs transmission of a burst without being interrupted according to an embodiment of the present disclosure.
FIG. 6 is a diagram illustrating an IB initiator that performs transmission of a burst and is interrupted by itself according to an embodiment of the present disclosure.
FIG. 7 is a diagram illustrating an IB initiator that performs transmission of a burst and is interrupted by at least one non-IB initiator according to an embodiment of the present disclosure.
FIG. 8 is a diagram illustrating an example of an applicable scenario of transmission of a burst and an HPT frame according to an embodiment of the present disclosure.
FIG. 9 is a flow chart of a method for performing communications via a channel by a wireless communication device according to an embodiment of the present disclosure.
FIG. 10 is a flow chart of a method for performing communications via a channel by a wireless communication device according to an embodiment of the present disclosure.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...".

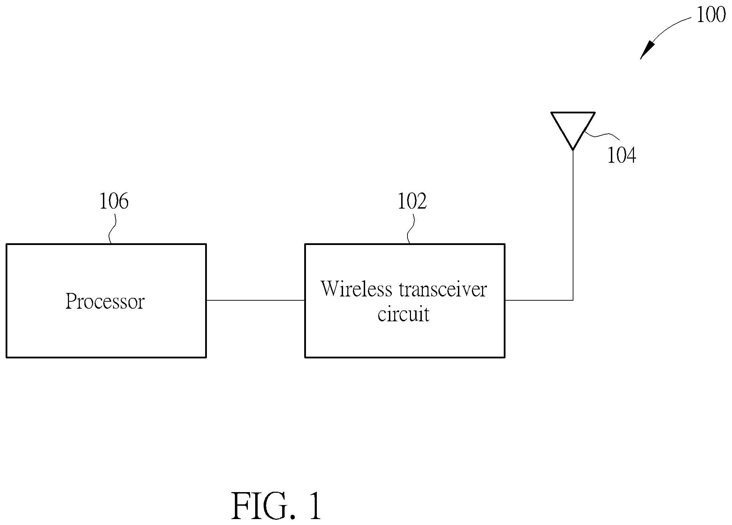

FIG. 1 is a diagram illustrating a wireless communication device 100 according to an embodiment of the present disclosure. For example, the wireless communication device 100 may operate according to the embodiments of the present disclosure. In addition, the wireless communication device 100 may be implemented as an access point (AP) and may also be implemented as a non-AP station (STA), depending upon actual design requirements. As shown in FIG. 1, the wireless communication device 100 may include a wireless transceiver circuit 102 (such as one or more transceiver), at least one antenna 104, and a processor 106. The processor 106 is configured to perform communications via a channel through the wireless transceiver circuit 102 according to the embodiments of the present disclosure. For example, the wireless transceiver circuit 102 may receive a wireless signal from a wireless transmission channel CHL (hereinafter denoted by "the channel CHL" for brevity) via the at least one antenna 104, and process the wireless signal to obtain a received frame/packet. The wireless transceiver circuit 102 may also process a frame/packet to be transmitted in order to obtain a corresponding signal as a wireless signal, and transmit the wireless signal via the at least one antenna 104.

In this embodiment, the wireless communication device 100 may be an interruptible burst (IB) initiator, and more particularly, may adopt an IB mechanism. For example, under a situation that the wireless communication device 100 successfully contends for the channel CHL after performing a backoff procedure, and starts to transmit data via the channel CHL, the wireless communication device 100 may perform transmission of a burst via the channel CHL, wherein the burst may include multiple sub-bursts, and each sub-burst may include operations of transmitting a data frame (e.g., a physical layer protocol data unit (PPDU)) and receiving a block acknowledgment (BA) frame. It should be noted that, the first sub-burst performed by the wireless communication device 100 may optionally include request to send (RTS)/clear to send (CTS) frame exchange operations with a target device. Understandably, multiple sub-bursts are allowed to be transmitted within a single transmission opportunity (TXOP), which are collectively referred as transmission of a burst, wherein the burst is interruptible after one sub-burst transmission is completed, and each sub-burst includes at least one frame exchange sequence (FES), such as transmission of a PPDU and reception of an acknowledgment frame (such as a BA frame).

In the IEEE 802.11 standards, an enhanced distributed channel access (EDCA) mechanism provides multiple access categories (ACs) to prioritize data transmission based on urgency and importance of the traffic, such as a background AC_BK (AC0), a best effort AC_BE (AC1), a video AC_VI (AC2), and a voice AC_VO (AC3). For the present disclosure, the high-priority traffic may be the traffic which is classified into the AC3 defined in the EDCA mechanism, and the low-priority traffic may be the traffic which is not classified into the AC3, but the present disclosure is not limited thereto.

In some embodiments, the high-priority traffic may be the traffic which is classified into the higher version of the AC3 (such as the AC3+, which can be regarded as a new access category with higher access priority than AC3). That is, the low-priority traffic may be the traffic which is not classified into the higher version of the AC3 (such as the AC3+).

In some embodiments, if another STA has urgent traffic requirements (e.g., a PPDU about to expire is required to be transmitted by the STA via the same channel CHL), the STA may also be as an STA with high-priority requirements. That is, the PPDU with the high-priority traffic can be defined according to the usage scenario as a PPDU carrying specific types of traffic. For example, the specific type of traffic can be the traffic with the highest access priority among multiple access categories (ACs), the traffic with latency requirements less than a latency value required by the low latency traffic, and/or the traffic that urgently needs to be transmitted, and so on.

Under a situation that the wireless communication device 100 is performing the transmission of the burst via the channel CHL, the wireless communication device 100 may transmit a high-priority trigger (HPT) frame to notify/indicate that the transmission of the burst is interruptible (it is noted that the HPT frame can also be referred as an interruptible-notification frame in the embodiment of the present disclosure), and make at least one other wireless communication device with high-priority traffic requirements have an opportunity to start contending for the channel CHL after receiving the HPT frame. For example, the wireless communication device 100 may perform the transmission of the HPT frame after a sub-burst ends (e.g., at a time point between transmissions of two sub-bursts included in the burst), and then detect whether the channel CHL is busy for performing subsequent operations.

Specifically, after the transmission of the HPT frame is completed, the wireless communication device 100 may detect whether the channel CHL is busy during a predetermined time interval. For example, the predetermined time interval may be a point coordination function interframe space (PIFS), and the PIFS is slightly longer than a Short Interframe Space (SIFS) and is defined as an SIFS plus one slot time. In response to the channel CHL not being detected to be busy during the PIFS, the wireless communication device 100 may start to perform transmission of a next sub-burst. In response to the channel CHL being detected to be busy during the PIFS, the wireless communication device 100 may abort the transmission of the burst, and re-perform the backoff procedure to contend for the channel CHL.

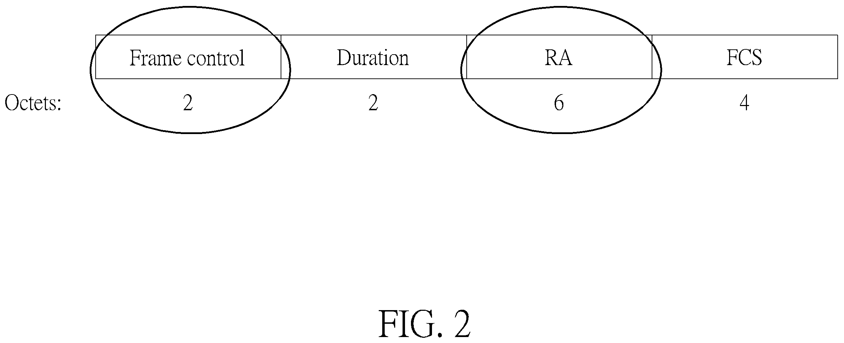

FIG. 2 is a diagram illustrating a format of an HPT frame according to an embodiment of the present disclosure, wherein the HPT frame may be implemented by a CTS frame, but the present disclosure is not limited thereto. For example, the HPT frame can be implemented by a QoS Null frame. For ease of explanation and understanding, this disclosure uses the CTS frame to implement the HPT frame as an example. As shown in FIG. 2, the HPT frame may include a frame control field with two octets, a duration field with two octets, a receiver address (RA) field with six octets, and a frame check sequence (FCS) field with four octets. In this embodiment, the RA field of the HPT frame may be set as a media access control (MAC) address of an IB initiator, and one or more bits included in the frame control field and/or the RA field may be utilized to indicate the burst transmission performed by the IB initiator via the channel CHL is interruptible.

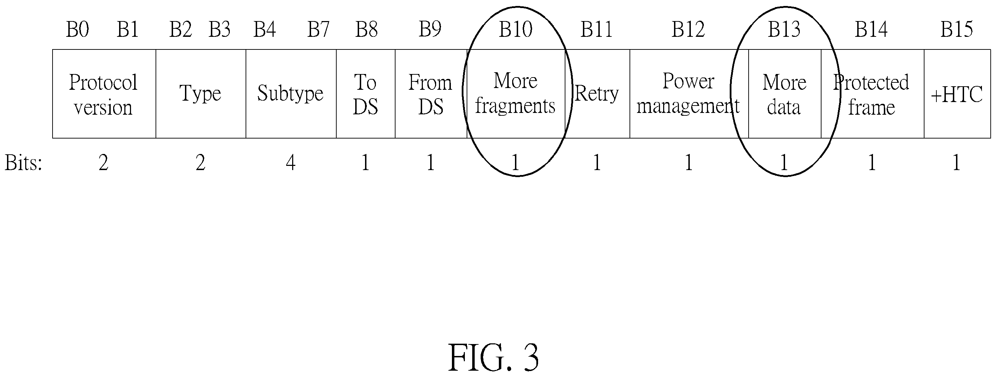

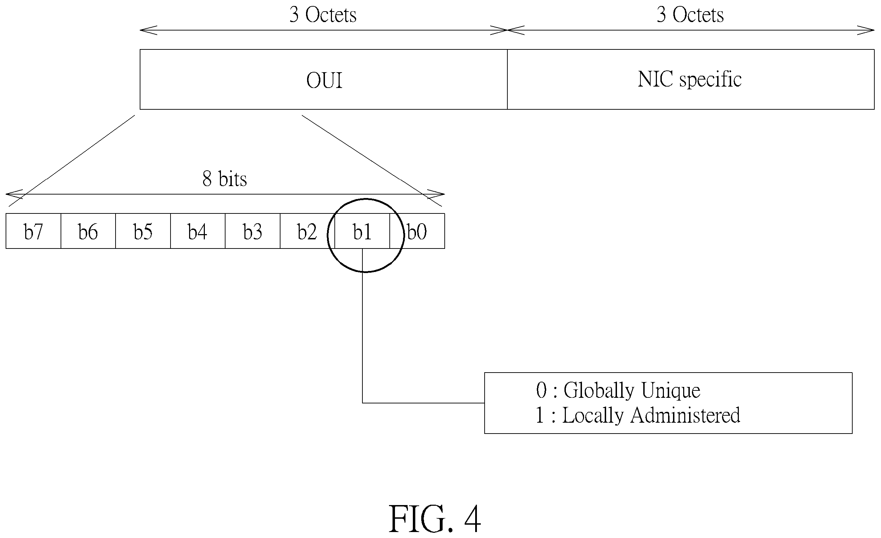

In detail, refer to FIG. 3 and FIG. 4. FIG. 3 is a diagram illustrating multiple sub-fields within a frame control field of an HPT frame according to an embodiment of the present disclosure. As shown in FIG. 3, the frame control field of the HPT frame may include a protocol version sub-field with two bits (B0 - B1), a type sub-field with two bits (B2 - B3), a subtype sub-field with four bits (B4 - B7), a to DS sub-field with one bit (B8), a from DS sub-field with one bit (B9), a more fragments sub-field with one bit (B10), a retry sub-field with one bit (B11), a power management sub-field with one bit (B12), a more data sub-field with one bit (B13), a protected frame sub-field with one bit (B14), and a +HTC sub-field with one bit (B15). It should be noted that the meaning of each sub-field is well known to those skilled in the art, so it is not described here for brevity. In this embodiment, a bit corresponding to any of the more fragments sub-field and the more data sub-field may be set as a preset value (e.g., a logical value "1") for interrupt-able indication of the transmission of the burst.

In embodiments of the present disclosure, the RA field of the HPT frame may be set according to the MAC address of an IB initiator. FIG. 4 is a diagram illustrating an MAC address format of an RA field of an HPT frame according to an embodiment of the present disclosure. As shown in FIG. 4, the MAC address may be an address with six octets, wherein the first three octets can form an organizationally unique identifier (OUI) field, and the last three octets can form a network interface controller (NIC) specific field. In this embodiment, a bit b1 (often referred as a local bit) for indicating globally unique or locally administered within the OUI field may be set as a preset value (e.g., a logical value "1") for interrupt-able indication of the transmission of the burst.

As a result, one or more bits included in the HPT frame may be utilized to indicate the burst transmission performed by the IB initiator via the channel CHL is interruptible, wherein the one or more bits may be the bit corresponding to the more fragments sub-field, the bit corresponding to the more data sub-field, and/or the bit for indicating globally unique or locally administered within the OUI field. That is, at least one bit among the above-mentioned three bits may be set as a preset value (e.g., a logical value "1") for interrupt-able indication of the transmission of the burst. The present disclosure, however, is not limited thereto. For example, other bits in the HPT frame can also be used for interrupt-able indication of the transmission of the burst.

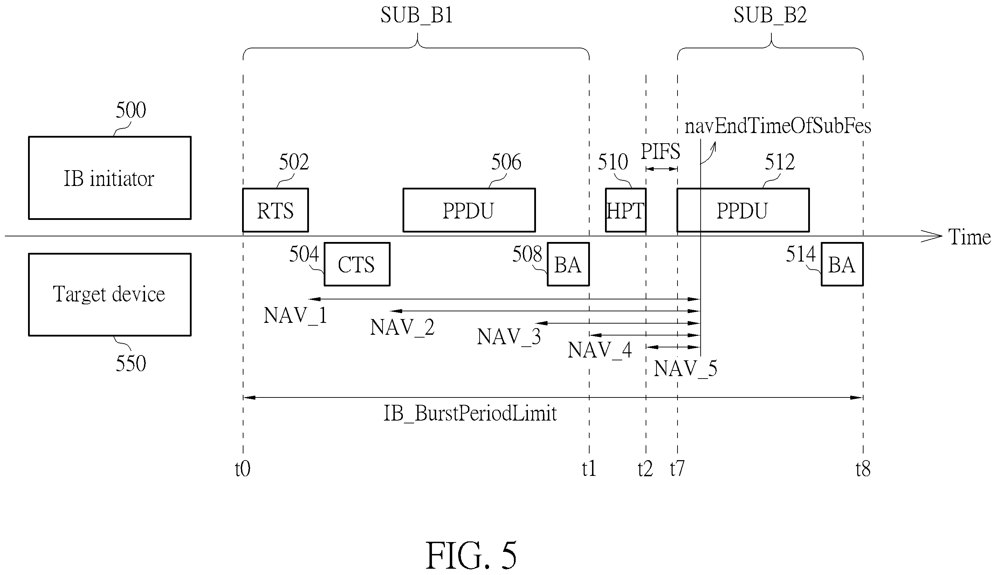

FIG. 5 is a diagram illustrating an IB initiator 500 that performs transmission of a burst without being interrupted according to an embodiment of the present disclosure, wherein the IB initiator 500 may be implemented by the wireless communication device 100 shown in FIG. 1. For example, in response to the IB initiator 500 being implemented as an AP, a target device 550 of the IB initiator 500 may be an STA. Similarly, in response to the IB initiator 500 being implemented as an STA, the target device 550 may be an AP. Assume that the IB initiator 500 has low-priority traffic requirements (e.g., the IB initiator 500 requires to transmit PPDUs with low-priority traffic, such as multiple PPDUs 506 and 512). After the IB initiator 500 performs the backoff procedure and successfully contends for the channel CHL, the IB initiator 500 may start to perform transmission of a burst (e.g., allocated for low-priority traffic) via the channel CHL at a time point t0, wherein the burst may include at least two sub-bursts, i.e., during a TXOP time, the IB initiator 500 may be allowed to perform transmission of the at least two sub-bursts.

In the embodiment as shown by FIG. 5, the burst may include sub-bursts SUB_B1 and SUB_B2, wherein the sub-burst SUB_B1 may include operations of transmitting an RTS frame 502, receiving a CTS frame 504, transmitting the PPDU 506, and receiving a BA frame 508; and the sub-burst SUB_B2 may include operations of transmitting the PPDU 512 and receiving a BA frame 514. In one example, the reception of a BA frame by an IB initiator may be regarded as the completion of a sub-burst. For example, at a time point t1, the transmission of the sub-burst SUB_B1 is completed.

The wireless communication device 100 may transmit an HPT frame 510 via the channel CHL after completing the transmission of the sub-burst SUB_B1 at the time point t1 and waiting for an SIFS, for notifying/indicating that the burst transmission performed by the IB initiator 500 via the channel CHL can be interrupted. At a time point t2 where the transmission of the HPT frame 510 is completed, the IB initiator 500 may start to detect whether the channel CHL is busy during the subsequent PIFS (which is equal to an SIFS plus one time slot). In this exemplary embodiment, the channel CHL is not detected to be busy during the subsequent PIFS. As a result, the IB initiator 500 can keep performing the transmission of the next sub-burst SUB_B2 at a time point t7 without being interrupted.

It should be noted that, both a network allocation vector (NAV) reservation for each sub-burst (such as the sub-burst SUB_B1) and an NAV reservation for the following HPT frame (such as the HPT frame 510) may extend up to a beginning of a next sub-burst (such as the sub-burst SUB_B2). For example, for the sub-burst SUB_B1 and the HPT frame 510, an NAV end time indicated by each of an NAV reservation of the RTS frame 502 (labeled as "NAV_1" in FIG. 5), an NAV reservation of the CTS frame 504 (labeled as "NAV_2" in FIG. 5), an NAV reservation of the PPDU 506 (labeled as "NAV_3" in FIG. 5), an NAV reservation of the BA frame 508 (labeled as "NAV_4" in FIG. 5), and an NAV reservation of the HPT frame 510 (labeled as "NAV_5" in FIG. 5) may be located between a starting time point and an end time point of operations of transmitting the PPDU 512 included in the sub-burst SUB_B2 (labeled as "navEndTimeOfSubFes" in FIG. 5). Under this situation, for a device that cannot successfully identify the HPT frame 510 (e.g., a legacy wireless communication device), the NAV end time indicated by the HPT frame 510 may ensure that the device will not perform any transmission operation before the NAV end time.

In addition, two time limits IB_PpduTimeLimit and IB_BurstPeriodLimit may be provided, wherein the time limit IB_PpduTimeLimit refers to the maximum allowed duration for a single PPDU transmission within an interruptible burst (IB), and the time limit IB_BurstPeriodLimit refers to the maximum allowed duration for the entire interruptible burst period. In other words, during an interruptible burst, transmission time of each PPDU is required to be not greater than the time limit IB_PpduTimeLimit (e.g., 1.5 ms), and a burst period is required to be not greater than the time limit IB_BurstPeriodLimit (e.g., 6 ms). That is, in the example embodiment of FIG. 5, the time interval from the time point t0 where the RTS frame 502 starts to be transmitted to a time point t8 where the BA frame 514 is received is required to be not greater than 6 ms. Hence, this ensures that that high-priority traffic can be transmitted in a timely manner with shorter delays.

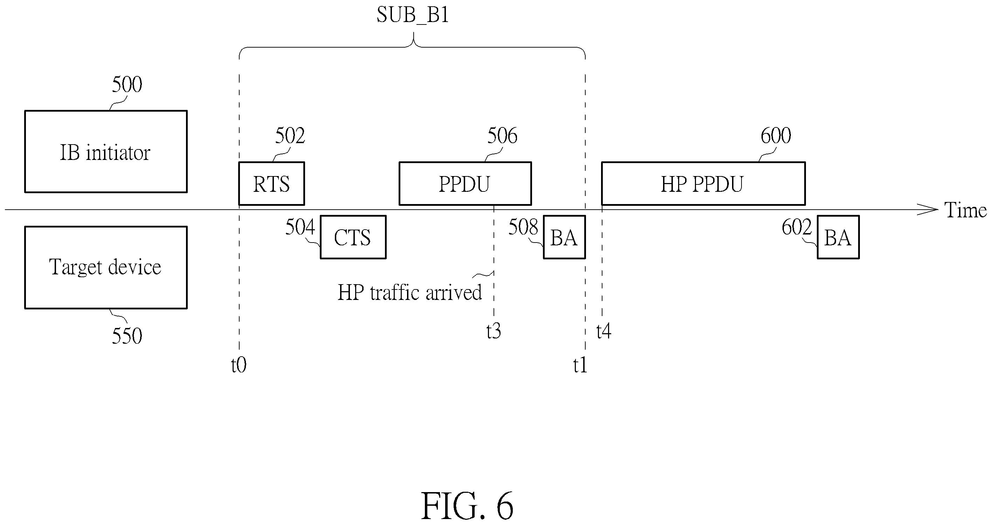

FIG. 6 is a diagram illustrating the IB initiator 500 that performs transmission of a burst and is interrupted by itself according to an embodiment of the present disclosure. The difference between the embodiments shown in FIGs. 5 and 6 is that, in FIG. 6, during a time period where the transmission of the sub-burst SUB_B1 is performed, the IB initiator 500 suddenly has high-priority traffic (e.g., a PPDU 600 with the high-priority traffic, labeled as "HP PPDU" in FIG. 6) needing to be served. For example, during the operations of transmitting the PPDU 506 (e.g., at a time point t3), the IB initiator 500 has the high-priority requirements (labeled as "HP traffic arrived" in FIG. 6). The IB initiator 500 may abort the transmission of the burst after completing the transmission of the sub-burst SUB_B1, wait for an SIFS (i.e., a time interval from the time point t1 to a time point t4), and then start to perform operations of serving the PPDU 600, such as transmitting the PPDU 600 to the target device 550 and receiving a BA frame 602 from the target device 550. In this way, during the transmission of the burst allocated for low-priority traffic, the IB initiator 500 can directly transmit the PPDU 600 with the high priority traffic without re-performing the backoff procedure.

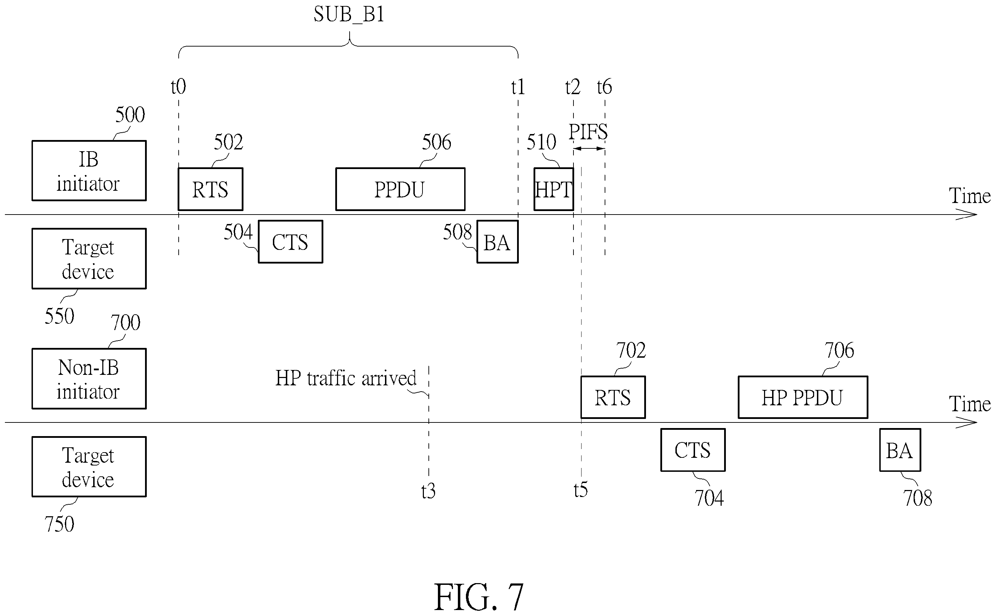

FIG. 7 is a diagram illustrating the IB initiator 500 that performs transmission of a burst and is interrupted by at least one non-IB initiator (e.g., a non-IB initiator 700) according to an embodiment of the present disclosure, wherein the non-IB initiator 700 may be any wireless communication device with high-priority requirements, such as the target device 550 of the IB initiator 500 with high-priority requirements, or a third-party device with high-priority requirements that is different from the IB initiator 500 and the target device 550. The difference between the embodiments shown in FIGs. 5 and 7 is that, in FIG. 7, during a time period where the transmission of the sub-burst SUB_B1 is performed, the non-IB initiator 700 has high-priority traffic (e.g., a PPDU 706 with the high-priority traffic, labeled as "HP PPDU" in FIG. 7) needing to be served. For example, during the operations of transmitting the PPDU 506 (e.g., at the time point t3), the non-IB initiator 700 has the high-priority requirements (labeled as "HP traffic arrived" in FIG. 7).

As a result, at the time point t2 where the transmission of the HPT frame 510 is completed, in response to the HPT frame 510 being received via the channel CHL, the non-IB initiator 700 may determine whether the received HPT frame 510 has a correct FCS value, determine whether an NAV end time of the non-IB initiator 700 is not greater than a sum of a predetermined time value and an NAV end time indicated by the HPT frame 510, and determine whether the non-IB initiator 700 needs to serve the high-priority traffic, wherein the predetermined time value is greater than or equal to zero. If Yes (i.e., the received HPT frame 510 has the correct FCS value, the NAV end time of the non-IB initiator 700 is not greater than the sum of the predetermined time value and the NAV end time indicated by the HPT frame 510, and the non-IB initiator 700 needs to serve the high-priority traffic), an NAV of the non-IB initiator 700 can be cleared. That is, the non-IB initiator 700 will not be affected by the limitations of being prevented from performing any transmission operation within the NAV end time indicated by the HPT frame 510. Afterwards, after waiting for an SIFS (e.g., from the time point t2 to a time point t5), the non-IB initiator 700 may start to adopt a high-priority EDCA mechanism (e.g., at the time point t5). More particularly, the non-IB initiator 700 may utilize an RTS/CTS frame exchange mechanism and special characteristics associated with the RTS frame to reduce the collision probability and improve transmission latency for the PPDUs with the high-priority traffic, wherein a preamble of the RTS frame is generated based on parameters dedicated to high-priority traffic. Specifically, the RTS frame adopted by the high-priority EDCA mechanism has a non-high throughput (non-HT) format and has a data rate determined by the parameters dedicated to high priority traffic.

Specifically, before transmitting the PPDU 706 with high-priority traffic, the non-IB initiator 700 may transmit an RTS frame 702 to a corresponding target device 750 in advance, in order to determine whether the target device 750 is able to receive the PPDU 706, and then transmit the PPDU 706 to the target device 750 in response to reception of a CTS frame 704 from the target device 750. Under a situation that another non-IB initiator desires to transmit PPDUs with low-priority traffic via the channel CHL, by the specific characteristics associated with the RTS frame, the another non-IB initiator having low-priority requirements may apply an extended interframe space (EIFS) for preventing from contending for the channel CHL with the non-IB initiator 700 having high-priority requirements, wherein EIFS has a longer interframe spacing compared to SIFS and PIFS.

For example, the concept of parameters dedicated to high-priority traffic is introduced, and a preamble of the RTS frame regarding high-priority traffic is generated based on the parameters dedicated to high-priority traffic. As a result, preambles of multiple RTS frames regarding high-priority traffic generated by different wireless communication devices based on the same parameters are the same. In this embodiment, at the time point t5, RTS frames related to high-priority traffic, such as the RTS frame 702 transmitted by the non-IB initiator 700 and other RTS frame(s) transmitted by at least one additional non-IB initiator with high-priority requirements receiving the HPT frame 510, may include a preamble and an MAC portion. The preamble is generated based on the same parameters dedicated to high-priority traffic, and the preambles of any two RTS frames among these RTS frames are identical. For example, an additional AP may broadcast/announce the parameters dedicated to high-priority traffic in beacon frames to all STAs in a basic service set (BSS) for generating the same preamble for the RTS frames regarding high-priority traffic. In another example, the parameters dedicated to high-priority traffic can be determined based on the preamble of the last received PPDU (e.g., the PPDU containing the HPT frame 510) via the channel CHL.

In an embodiment, the parameters dedicated to high-priority traffic may indicate that the format of the RTS frame regarding high-priority traffic, wherein the RTS frame regarding high-priority traffic is in a non-high throughput (non-HT) format and have a specific data rate. Hence, the RTS frames regarding high-priority traffic transmitted by the non-IB initiator 700/the at least one additional non-IB initiator may have the non-HT format and the same data rate. Further, the parameters dedicated to high-priority traffic may also indicate a carrier frequency for transmitting preamble of the RTS frame regarding high-priority traffic. Hence, the carrier frequency used for transmitting preambles of the RTS frames regarding high-priority traffic may be the same. For example, carrier frequency offset (CFO) for the preambles of the RTS frames regarding high-priority traffic meets specific requirements. As a result, before transmitting the RTS frame 702, the non-IB initiator 700 may generate the preamble of the RTS frame 702 according to the parameters dedicated to high-priority traffic. Similarly, the at least one additional non-IB initiator may generate the preamble of at least one additional RTS frame according to the parameters dedicated to high-priority traffic. In this embodiment, the preamble of the RTS frame 702 is the same as that of the at least one additional RTS frame.

The same preamble in each RTS frame regarding high-priority traffic may indicate a transmission time end point of the RTS frame. In addition, since the same preamble of the RTS frames, any device (e.g., a STA) in a receiving state can successfully decode the preamble of RTS frames but detect an FCS error in the MAC part of the RTS frames (i.e., an FCS value for the RTS frames is not correct), and the device that has no high-priority traffic PPDU to transmit at that time or the device that successfully decodes the preamble but detects an FCS error may start to apply an EIFS at the transmission time end point of the RTS frames, in order to prepare for a next transmission. During the process of applying the EIFS, the device is prevented from performing any backoff procedure. For example, after the operations of serving the PPDU 706 with high-priority traffic are completed, if other wireless communication devices receiving the HPT frame 510 still transmit the RTS frames regarding high-priority traffic for contending for the channel CHL, and the non-IB initiator 700 has the low priority requirements or successfully decodes the preamble but detects an FCS error regarding the RTS frames, the non-IB initiator 700 may also apply an EIFS at the transmission time end point of these RTS frames.

In this way, during the process of retry operations, the devices performing a backoff procedure are limited to be devices associated with the high-priority traffic requirements. Specifically, only the devices associated with the last collision event are able to contend for the channel CHL during one retry operation, which can make the collision events converged promptly. Since the focus of the present disclosure is not on the collision conversion mechanism adopted when multiple devices contend for the channel CHL at the same time, but on the fact that the transmission of the burst and the HPT frame can be performed in conjunction with the collision conversion mechanism, further descriptions are omitted here for brevity.

For the IB initiator 500, at the time point t2 where the transmission of the HPT frame 510 is completed, the IB initiator 500 may start to detect whether the channel CHL is busy during the subsequent PIFS. In this embodiment, the channel CHL is detected to be busy during the subsequent PIFS. As a result, the IB initiator 500 can abort the transmission of the burst, for example, the burst is a low priority (also referred as low AC) IB. Hence, the originally scheduled the sub-burst SUB_B2 is not transmitted, and the IB initiator 500 may re-perform the backoff procedure.

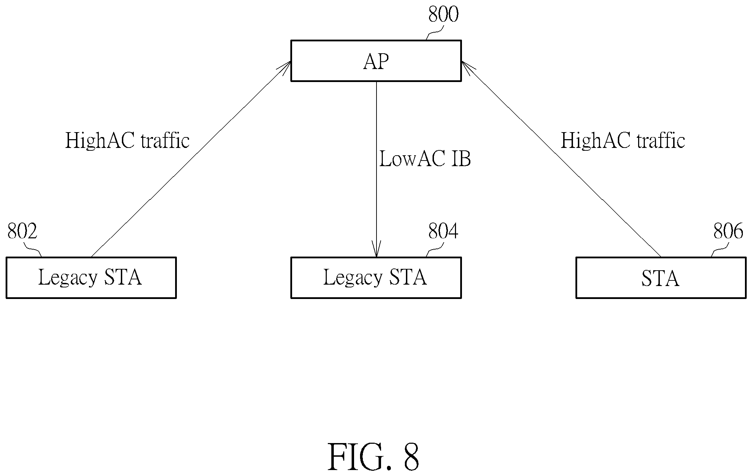

FIG. 8 is a diagram illustrating an example of an applicable scenario of transmission of a burst and an HPT frame according to an embodiment of the present disclosure. As shown in FIG. 8, each of an AP 800 and a STA 806 may be implemented by the wireless communication device 100 capable of operating according to embodiments of the present disclosure, and each of legacy STAs 802 and 804 may be an STA that does not support the features of the disclosed embodiments, wherein the AP 800 can adopt the above-mentioned HPT frame transmission mechanism, and the STA 806 can successfully identify the received HPT frame. For example, each of the AP 800 and the STA 806 may be an ultra high reliability (UHR) AP/STA complying with the Wi-Fi 8 generation (e.g., a UHR generation) or subsequent Wi-Fi generations, but the present disclosure is not limited thereto.

In this embodiment, the AP 800 may be an IB initiator, and may perform transmission of low priority IB with the legacy STA 804 via the channel CHL after successfully contending for the channel CHL. Both the legacy STA 802 and the STA 806 have high-priority requirements. At a time point between transmissions of two sub-bursts among the low AC IB, the AP 800 may transmit an HPT frame via the channel CHL in order to notify STAs with the high-priority requirements (i.e., the legacy STA 802 and the STA 806) that the data transmission performed by the AP 800 via the channel CHL can be interrupted. For the STA 806, after receiving the HPT frame and waiting for an SIFS, the above-mentioned high-priority EDCA mechanism can be adopted in order to interrupt the transmission of the low AC IB and start to access the channel CHL. For the legacy STA 802, after receiving the HPT frame, the legacy STA 802 will be affected by the limitations of being prevented from performing any transmission operation within the NAV time period indicated by the HPT frame.

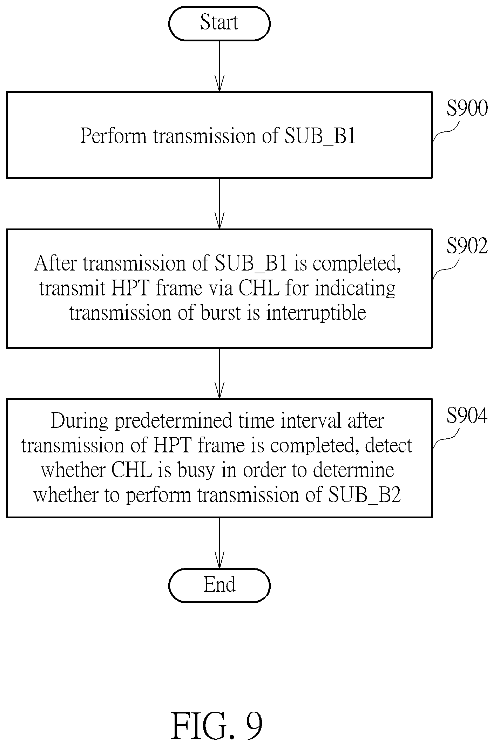

FIG. 9 is a flow chart of a method for performing communications via the channel CHL by a wireless communication device according to an embodiment of the present disclosure. Provided that the result is substantially the same, the steps are not required to be executed in the exact order shown in FIG. 9. For example, the method shown in FIG. 9 may be employed by the wireless communication device 100 shown in FIG. 1 (e.g., the IB initiator 500 shown in FIG. 5).

In step S900, transmission of a first sub-burst included in a burst is performed. For example, the first sub-burst may be the sub-burst SUB_B1 shown in FIG. 5.

In step S902, after the transmission of the sub-burst SUB_B1 is completed, an HPT frame (e.g., the HPT frame 510 shown in FIG. 5) is transmitted via the channel CHL for indicating the transmission of the burst is interruptible.

For example, the HPT frame may be implemented by a CTS frame. The HPT frame may include a frame control field and an RA field, and one or more bits included in the frame control field and the RA field is utilized to indicate the transmission of the burst is interruptible. The frame control field includes a more fragments sub-field and a more data sub-field, and a bit corresponding to any of the more fragments sub-field and the more data sub-field is utilized to indicate the transmission of the burst is interruptible. The RA field is set as an MAC address of the wireless communication device 100. The MAC address includes an OUI field, and a bit for indicating globally unique or locally administered within the OUI field is utilized to indicate the transmission of the burst is interruptible.

In addition, an NAV reservation for the sub-burst SUB_B1 and the HPT frame extends up to a beginning of the sub-burst SUB_B2.

In Step S904, during a predetermined time interval (e.g., a PIFS) after the transmission of the HPT frame is completed, it is detected whether the channel CHL is busy in order to determine whether to perform transmission of a second sub-burst included in the burst. For example, the second sub-burst may be the sub-burst SUB_B2 shown in FIG. 5.

For example, in response to the channel being detected to be busy during the predetermined time interval, the transmission of the burst is aborted. In response to the channel not being detected to be busy during the predetermined time interval, it is determined to perform the transmission of the sub-burst SUB_B2.

Furthermore, in response to a PPDU with high-priority traffic being expected to be transmitted by the wireless communication device 100 when the transmission of the sub-burst SUB_B1 is performed, the transmission of the burst is aborted after the transmission of the sub-burst SUB_B1 is completed, and operations of serving the PPDU with high-priority traffic are performed.

Since a person skilled in the pertinent art can readily understand details of the steps after reading above paragraphs, further description is omitted here for brevity.

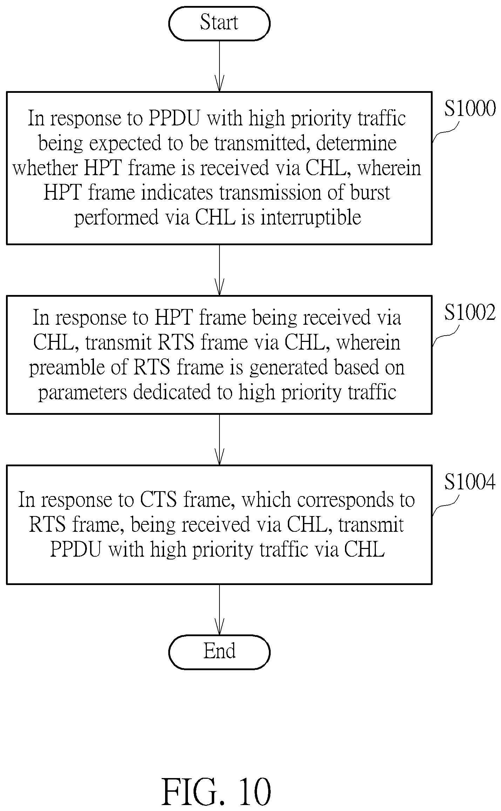

FIG. 10 is a flow chart of a method for performing communications via the channel CHL by a wireless communication device according to an embodiment of the present disclosure. Provided that the result is substantially the same, the steps are not required to be executed in the exact order shown in FIG. 10. For example, the method shown in FIG. 10 may be employed by the wireless communication device 100 shown in FIG. 1 (e.g., the non-IB initiator 700 shown in FIG. 7).

In Step S1000, in response to a PPDU with high priority traffic being expected to be transmitted, it is determined whether an HPT frame is received via the channel CHL, wherein the HPT frame indicates transmission of a burst performed via the channel CHL is interruptible.

In Step S1002, in response to the HPT frame being received, an RTS frame is transmitted via the channel CHL, wherein a preamble of the RTS frame is generated based on parameters dedicated to high-priority traffic. For example, the RTS frame has a non-HT format and has a data rate determined by the parameters dedicated to high priority traffic.

In an embodiment, the HPT frame further indicates an NAV end time. In response to the HPT frame being received via the channel CHL, it is determined whether the HPT frame has a correct FCS value, and whether an NAV end time of the wireless communication device 100 is not greater than a sum of the NAV end time indicated by the HPT frame and a predetermined time value. In response to the HPT frame having the correct FCS value, and the NAV end time of the wireless communication device 100 not being greater than the sum of the NAV end time indicated by the HPT frame and the predetermined time value, an NAV of the wireless communication device 100 is cleared and the RTS frame is transmitted.

In addition, in response to a preamble of any RTS frame being successfully detected on the channel CHL, and an FCS value for the any RTS frame not being correct, an EIFS is applied.

In Step S1004, in response to a CTS frame, which corresponds to the RTS frame, being received via the channel CHL, the PPDU with the high-priority traffic is transmitted via the channel CHL.

Since a person skilled in the pertinent art can readily understand details of the steps after reading above paragraphs, further description is omitted here for brevity.

In summary, the methods and the associated wireless communication devices of the present disclosure can transmit an HPT frame after transmission of one sub-burst comprised in a burst is completed between two sub-bursts included in a burst via an IB initiator, in order to notify other wireless communication devices (such as the devices with high-priority requirements) that the burst transmission performed by the IB initiator can be interrupted, which can improve the high-priority traffic latency while having minimum impact on the peak throughput. This mechanism is applicable to various scenarios, such as downlink (DL) transmission, uplink (UL) transmission, or UL trigger-based transmission. For STAs with high-priority requirements, the mechanism can be combined with an RTS/CTS frame exchange mechanism and specific features associated with the RTS frame in order to reduce collision probability, thereby eliminating the need for the AP to perform polling or triggering. Additionally, the mechanism does not affect the original data transmission and reception behavior of legacy STAs since the legacy STAs can still suspend performing any transmission operation based on the NAV time period indicated by the HPT frame and sub-burst, thereby ensuring broader applicability of the present disclosure.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing communications via a channel by a wireless communication device, comprising:
performing a transmission of a first sub-burst comprised in a burst;
after the transmission of the first sub-burst is completed, transmitting a high-priority trigger (HPT) frame via the channel for indicating a transmission of the burst is interruptible; and
during a predetermined time interval after the transmission of the HPT frame is completed, detecting whether the channel is busy to determine whether to perform a transmission of a second sub-burst comprised in the burst.

2. The method of claim 1, wherein the predetermined time interval is a point coordination function interframe space (PIFS).

3. The method of any one of claims 1 or 2, wherein the HPT frame is implemented by a clear to send (CTS) frame.

4. The method of claim 3, wherein the HPT frame comprises a frame control field and a receiver address (RA) field; and one or more bits comprised in the frame control field and the RA field is utilized to indicate the transmission of the burst is interruptible.

5. The method of claim 4, wherein the frame control field comprises a more fragments sub-field and a more data sub-field, and a bit corresponding to any of the more fragments sub-field and the more data sub-field is utilized to indicate the transmission of the burst is interruptible.

6. The method of any one of claims 4 or 5, wherein the RA field is set as a media access control (MAC) address of the wireless communication device.

7. The method of claim 6, wherein the MAC address comprises an organizationally unique identifier (OUI) field, and a bit for indicating globally unique or locally administered within the OUI field is utilized to indicate the transmission of the burst is interruptible.

8. The method of any one of claims 1 to 7, wherein a network allocation vector (NAV) reservation for the first sub-burst and the HPT frame extends up to a beginning of the second sub-burst.

9. The method of any one of claims 1 to 8, wherein the step of during the predetermined time interval after the transmission of the HPT frame is completed, detecting whether the channel is busy in order to determine whether to perform the transmission of the second sub-burst comprises:
in response to the channel being detected to be busy during the predetermined time interval, aborting the transmission of the burst; and
in response to the channel not being detected to be busy during the predetermined time interval, determining to perform the transmission of the second sub-burst;
and/or the method further comprising:
in response to a physical layer protocol data unit (PPDU) with high-priority traffic being expected to be transmitted by the wireless communication device when the transmission of the first sub-burst is performed, aborting the transmission of the burst after the transmission of the first sub-burst is completed, and performing operations of serving the PPDU with high-priority traffic.

10. A method for performing communications via a channel by a wireless communication device, comprising:
in response to a physical layer protocol data unit (PPDU) with high priority traffic being expected to be transmitted, determining whether a high-priority trigger (HPT) frame is received via the channel, wherein the HPT frame indicates a transmission of a burst performed via the channel is interruptible;
in response to the HPT frame being received via the channel, transmitting a request to send (RTS) frame via the channel, wherein a preamble of the RTS frame is generated based on parameters dedicated to high-priority traffic; and
in response to a clear to send (CTS) frame, which corresponds to the RTS frame, being received via the channel, transmitting the PPDU with the high-priority traffic via the channel.

11. The method of claim 10, wherein the HPT frame further indicates a network allocation vector (NAV) end time; and the method further comprises:
in response to the HPT frame being received via the channel, determining whether the HPT frame has a correct frame check sequence (FCS) value, and determining whether an NAV end time of the wireless communication device is not greater than a sum of the NAV end time indicated by the HPT frame and a predetermined time value.

12. The method of claim 11, further comprising:
in response to the HPT frame having the correct FCS value, and the NAV end time of the wireless communication device not being greater than the sum of the NAV end time indicated by the HPT frame and the predetermined time value, clearing an NAV of the wireless communication device and transmitting the RTS frame.

13. The method of any one of claims 10 to 12, further comprising:
in response to a preamble of any RTS frame being successfully detected on the channel, and a frame check sequence (FCS) value for the any RTS frame not being correct, applying an extended interframe space (EIFS);
and/or wherein the RTS frame has a non-high throughput (non-HT) format and has a data rate determined by the parameters dedicated to high priority traffic.

14. A wireless communication device, comprising:
a wireless transceiver circuit, and
a processor coupled to the wireless transceiver circuit, and configured to perform a communication method via a channel through the wireless transceiver circuit, wherein the communication method comprising:
performing a transmission of a first sub-burst comprised in a burst;
after the transmission of the first sub-burst is completed, transmitting a high-priority trigger (HPT) frame via the channel for indicating a transmission of the burst is interruptible; and
during a predetermined time interval after the transmission of the HPT frame is completed, detecting whether the channel is busy to determine whether to perform a transmission of a second sub-burst comprised in the burst.

15. The wireless communication device of claim 14, wherein the predetermined time interval is a point coordination function interframe space (PIFS);
and/or wherein the HPT frame is implemented by a clear to send (CTS) frame;
and/or wherein the processor is further configured to:
in response to the channel being detected to be busy during the predetermined time interval, abort the transmission of the burst; and
in response to the channel not being detected to be busy during the predetermined time interval, determine to perform the transmission of the second sub-burst via the wireless transceiver circuit;
and/or wherein the processor is further configured to:
in response to a physical layer protocol data unit (PPDU) with high-priority traffic being expected to be transmitted by the wireless communication device when the transmission of the first sub-burst is performed, abort the transmission of the burst after the transmission of the first sub-burst is completed, and perform operations of serving the PPDU with high-priority traffic.
